Europäisches Patentamt

European Patent Office

Office européen des brevets

(11) Veröffentlichungsnummer: **0 252 308**
**B1**

(12) **EUROPÄISCHE PATENTSCHRIFT**

(45) Veröffentlichungstag der Patentschrift:
28.03.90

(51) Int. Cl.⁴: **C21C 5/52**, C21C 1/00,
C22B 9/10, H05B 6/34

(21) Anmeldenummer: 87108219.4

(22) Anmeldetag: 06.06.87

(54) Verfahren zum Behandeln von Metallschmelzen und Vorrichtung zum Durchführen des Verfahrens.

(30) Priorität: 12.06.86 LU 86469
05.08.86 LU 86541

(43) Veröffentlichungstag der Anmeldung:
13.01.88 Patentblatt 88/2

(45) Bekanntmachung des Hinweises auf die Patenterteilung:
28.03.90 Patentblatt 90/13

(84) Benannte Vertragsstaaten:
AT BE CH DE ES FR GB GR IT LI LU NL SE

(56) Entgegenhaltungen:
EP-A- 0 120 684
CH-A- 438 390
DE-A- 1 903 212
GB-A- 1 219 956
LU-A- 31 860
US-A- 1 940 622

(73) Patentinhaber: CENTREM S.A., 18, rue J.P. Brasseur,
L-1258 Luxembourg(LU)

(72) Erfinder: METZ Paul, 18, rue J.P. Brasseur,
LUXEMBOURG 1258(LU)

(74) Vertreter: Meyers, Ernest et al, Office de Brevets
FREYLINGER & ASSOCIES B.P. 1 321, route d'Arlon,
L-8001 Strassen(LU)

## Beschreibung

Die Erfindung betrifft ein Verfahren zum Behandeln von Metallschmelzen durch Zugabe von chemisch aktiven Substanzen oder Legierungselementen, wobei die Metallschmelze in einem geeigneten im wesentlichen zylinderförmigen Gefäss mittels elektromagnetischer Kraft in Bewegung gesetzt wird. Die Erfindung betrifft ebenfalls eine Vorrichtung zur Durchführung dieses Verfahrens.

Metallschmelzen insbesondere Eisen und Stahlschmelzen werden üblicherweise durch inniges Mischen mit chemisch aktiven Mitteln behandelt, welche der Schmelze in festem, flüssigem oder gasförmigem Zustand zugegeben werden.

So werden z.B. Roheisenschmelzen dadurch entschwefelt bzw. entphosphort, dass sie mit geeigneten Mitteln z.B. Soda bzw. basischen oxydierenden Schlacken vermischt werden. Stahlschmelzen werden ebenfalls z.B. zur Desoxydation bzw. Entschwefelung dadurch behandelt, dass sie mit pulverförmigen Stoffen oder Schlacken meistens in Pfannen gemischt werden.

Auch werden Legierungselemente durch inniges Mischen mit den Metallen in diese eingebracht. Auch chemische Reaktionen werden durch inniges Vermischen fester Stoffe mit Metallschmelzen erzielt.

So können z.B. Kohlen dadurch vergast werden, dass sie in Roheisenschmelzen, welche gleichzeitig oder anschliessend oxydiert werden, eingebracht werden. Auch wurde bereits im luxemburgischen Patent Nr 81 330 vorgeschlagen, Zink bzw. Zink und Blei enthaltende Stäube (Hochofenstaub) dadurch zu behandeln, dass sie, eventuell mit einem Zusatz von Kohlenstoff, in ein Roheisenbad eingeblasen werden, wobei eine Trennung von Blei und Zink einerseits möglich wird und andererseits das Eisen unter reduzierter Form zurückgewonnen werden kann.

Ein klassischer Weg zum Einbringen pulverförmiger oder granulierter Stoffe in Metallbäder besteht darin, dass die einzubringenden Stoffe in einem Gasstrom suspendiert werden und mittels Lanzen auf oder in das Bad eingebracht werden. Es hat sich jedoch herausgestellt, dass während diesem Einblasen grössere Mengen der zu behandelnden Stoffe durch den Gasstrom wieder herausgebracht werden und so den Reaktionen verloren gehen.

Es ist ebenfalls bekannt, metallurgische Reaktionen wie z.B. Entsilizierung, Entphosphorung, bzw. Entschwefelung von Roheisen in den Abstichrinnen der Hochöfen durch Ein- bzw. Aufblasen von oxydierenden oder reduzierenden Stoffen vorzunehmen.

Es ist ausserdem bekannt, dass mit herkömmlichen elektromagnetischen Rinnen Gegenstromoperationen durchgeführt werden können. Es hat sich jedoch herausgestellt, dass bei dieser Arbeitsweise meistens nur ein ungenügender Mischeffekt erzielt werden kann.

Die Aufgabe der vorliegenden Erfindung besteht darin, ein Verfahren und eine Vorrichtung zu schaffen, welche das Einbringen von den Substanzen erleichtern und eine bessere Vermischung der Schmelze mit den Zutaten ermöglichen, gleichwohl ob letztere in fester, flüssiger oder sogar gasförmiger Form beigegeben werden.

Erfindungsgemäss wird diese Aufgabe durch ein Verfahren und eine Vorrichtung gelöst, welche die in den Hauptansprüchen angeführten Merkmale aufweisen. Weitere Ausbildungen der Erfindung befinden sich in den Unteransprüchen.

Mit dem erfindungsgemässen Verfahren wird eine innige Durchmischung zwischen dem zu behandelnden Metall und der zur Metallbehandlung eingesetzten Stoffe bzw. Gase erzielt, wodurch eine wesentliche Beschleunigung der erwünschten Reaktionen bei gleichzeitiger Verminderung der Temperaturverluste erreicht wird.

Das Verfahren nach dieser Erfindung erleichtert das Einbringen der verschiedensten Stoffe in Metallbäder, insbesondere wenn es sich um feinverteilte Stoffe handelt, welche in diesem Falle verlustfrei in das Metall eingebracht werden können. Ausserdem führt das Verfahren nach dieser Erfindung zu einer erheblichen Prozessbeschleunigung derart, dass man entweder mit kleineren Anlagen auskommt, oder wie im Falle der Hochofenrinnen in dem beschränkten Wege zwischen Hochofen und Pfannen mehrere Reaktionen wie z.B. Entsilizierung und anschliessend Entphosphorung bzw. Entschwefelung durchführen kann.

Das Verfahren nach der Erfindung unterscheidet sich wesentlich von den bis jetzt bekannten Metallbehandlungsverfahren durch Induktion. In den bis heute bekannten angewandten Verfahren wird bekanntlich nur eine Homogenisierung bzw. eine Relativbewegung Schlacken-Bad angestrebt, wobei nach dem Verfahren nach der Erfindung eine regelrechte Durchmischung zwischen dem Metallbad und den zur Behandlung eingesetzten Stoffe bzw. Gase erzielt wird.

Das Verfahren nach der Erfindung kann sowohl in Rinnen, die z.B. zum Transport des Roheisens zwischen Abstich am Hochofen und den Transportpfannen eingesetzt werden, als auch in rinnenförmigen Öfen, bei welchen die Länge mindestens dem Durchmesser des Ofens entspricht, durchgeführt werden. Es können auch im Rahmen der Erfindung Öfen eingesetzt werden, bei welchen eine Teilmenge des Metalls aus einem grösseren Ofen kurz unterhalb der Oberfläche aus einem Teil des Ofens durch eine Rinne entnommen wird und durch die gleiche Rinne einem anderen Teil des Ofens oder einem anderen Ofen wieder zufliesst, wobei die Beförderung des Metalls zwischen Austritt aus dem Ofen in die Rinne und Eintritt aus der Rinne in den Ofen durch getrennte Induktoren bzw. durch die zur Durchwirbelung des Metalls benutzten Induktoren bewerkstelligt werden kann. Bei Verwendung eines grossen Ofens kann derselbe durch eine Zwischenwand getrennt sein, wobei im Unterteil dieser Zwischenwand eine Verbindung zwischen beiden Ofenteilen vorgesehen werden kann. Dieser durch eine Zwischenwand getrennte Verbundofen kann durch zwei in ihrem Unterteil verbundene Öfen ersetzt werden.

Im Rahmen dieser Erfindung können der oder die Induktoren ihre Bewegung senkrecht zur Rinnen- bzw. Ofenachse bewirken. Bei Verwendung mehrerer parallel angeordneter Induktoren können dieselben ihre Bewegung in der gleichen Drehrichtung bewirken. Es kann in einzelnen Fällen jedoch vorteilhaft sein bei Verwendung mehrerer parallel angeordneter Induktoren ihre Bewegung jeweils in entgegengesetzten Richtungen zu betätigen. Hierdurch kann ein noch intensiverer Durchmischungseffekt erzielt werden.

Diese Induktoren können jedoch auch auf sehr vorteilhafte Weise derart angeordnet sein, dass sie zusätzlich zur Beförderung des Metalls um die Rinnenachse gleichzeitig zu einer Beförderung des Metalls in eine im wesentlichen horizontale oder steigende Richtung benutzt werden.

In vielen Fällen ist es sogar angebracht, zwecks Beschleunigung der Gegenstromreaktion die Vorrichtung mit einer gewissen Neigung auszulegen. Diese Neigung ist abhängig von der Reaktionsgeschwindigkeit und sollte zumindest bei Versuchsanlagen zwischen 0 und 20° regelbar sein. Bei verschiedenen Behandlungsstufen ist es angebracht einer und derselben Rinne mehrere Neigungen zu geben, wobei Teile einer derartigen Rinne unter Form von herkömmlichen elektromagnetischen Transportrinnen eingesetzt werden können.

Letzte Anwendung, welche z.B. durch helikoidal um die Längsachse ausgerichtete Induktoren erzielt werden kann, führt zur Möglichkeit, metallurgische Reaktionen im Gegenstrom durchzuführen, wobei die Bad-Schlackenreaktionen auf Grund der Gleichgewichtsverhältnisse wesentlich verbessert werden können.

Die Induktoren können fest an den Behandlungsapparaten angeordnet sein und nur nach Verschleiss der feuerfesten Auskleidung an andere Behandlungsapparate befestigt werden. In vielen Fällen ist es jedoch besonders vorteilhaft, die Induktoren derart anzuordnen, dass die Behandlungsgefässe leicht in die Induktoren eingeschoben werden können, so dass viele Behandlungen mit den gleichen Induktoren durchgeführt werden können. Hierbei sind naturgemäss die Behandlungsapparate aus Materialen herzustellen, welche die Wirkung der Induktoren nicht oder kaum stören.

Es fällt nicht aus dem Rahmen dieser Erfindung, die durch induktive Kräfte bewirkte innige Durchmischung durch mechanische Kräfte zu unterstützen. Diese Unterstützung kann bei Durchflussrinnen bzw. bei Rinnen, welche zwei Ofenteile bzw. Öfen miteinander verbinden, durch eine geeignete Ausbildung der feuerfesten Auskleidung bewirkt werden.

Werden mehrere Verfahrensstufen hintereinander geschaltet, so ist es notwendig, die Verfahrensstufen durch Siphonvorrichtungen voneinander zu trennen, um auf diese Weise ein möglichst vollständiges Zwischenabschlacken zu erreichen.

Die Erfindung wird nachfolgend anhand der in den Zeichnungen dargestellten praktischen Ausführungsbeispiele näher erläutert. Es zeigen:

Figur 1: einen Längsschnitt durch einen Rinnenofen;

Figur 1a: einen Querschnitt durch einen offenen und

Figur 1b: einen Querschnitt durch einen geschlossenen Rinnenofen;

Figur 2: einen Ofen wie in Figur 1 mit helikoidal angeordneten Induktoren;

Figur 3: einen Querschnitt durch einen Ofen mit auf beiden Seiten angeordneten Induktoren;

Figur 4: eine schematische Ansicht einer Rinnenanlage mit mehreren Behandlungsstufen;

Figuren 5a, 5b, 5c: eine Draufsicht und zwei Seitenansichten, teilweise im Schnitt einer Anlage zur Behandlung von Teilmengen;

Figuren 6 und 6a: einen Schnitt bzw. eine Draufsicht einer Anlage für eine Torpedopfanne;

Figur 7: einen Vertikalschnitt und

Figur 7a: eine Draufsicht einer ersten Ausführung einer Kohlenvergasungsanlage;

Figur 8: einen Vertikalschnitt und

Figur 8b: eine Draufsicht einer zweiten Ausführung einer Kohlenvergasungsanlage.

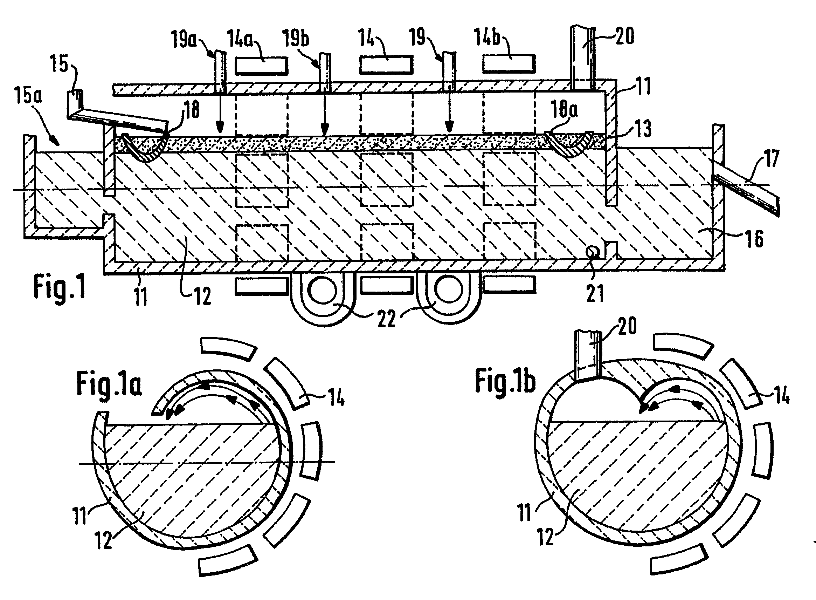

Der in den Figuren 1, 1a und 1b gezeigte Ofen besteht aus einer feuerfesten Auskleidung 11, welche das Metall 12 und die Schlacke 13 enthält. Ein oder mehrere an sich bekannte Induktoren fördern das Metall bis zum Ofenscheitel, wo es möglicherweise durch eine geeignete Ausführungsform des feuerfesten Mantels unterstützt, auf das Metallbad bzw. die Schlacke zurückfällt bzw. zurückbefördert wird und so zu einer innigen Durchmischung Metall-Schlacke führt. Der oder die Induktoren können in einem Sektor 14 angeordnet sein, können jedoch auch auf mehreren parallel angeordneten Sektoren 14, 14a und 14b angebracht werden.

Der in Figur 1 dargestellte Rinnenofen ist für einen kontinuierlichen Gebrauch z.B. in einer Hochofenabstichrinne gedacht, wobei das Roheisen durch die mit 15 angedeutete Rinne in den Rinnenofen einfliesst und nach Durchqueren des Siphons 16 über die Rinne 17 den Rinnenofen verlässt. Die Schlacke 13 kann über die Rinnen 18 und 18a abfliessen, wobei unter ausschliesslicher Benutzung der Rinne 18 der Ofen im vorteilhaften Gegenstrom arbeitet. Die zur Metallbehandlung eingesetzten Stoffe bzw. Gase werden dem Ofen durch die Stutzen und/oder Lanzen 19, 19a und 19b zugeführt.

Aus der Darstellung von Figur 1 geht eindeutig hervor, dass bei der Benutzung des Ofens nach der Erfindung eine sehr innige Durchmischung Bad-Schlacke bzw. Reaktionsgase und infolgedessen eine hohe Effizienz erreicht wird.

Der in Figur 1 dargestellte Ofen ist für einen kontinuierlichen Durchlaufbetrieb gedacht. Will man dieselbe oder eine ähnliche Vorrichtung für einen diskontinuierlichen Betrieb ausnutzen, so wird der Siphon 16 durch eine an sich bekannte Vorrichtung wie z.B. ein Stichloch ersetzt bzw. der Ofen als Kippofen ausgebildet.

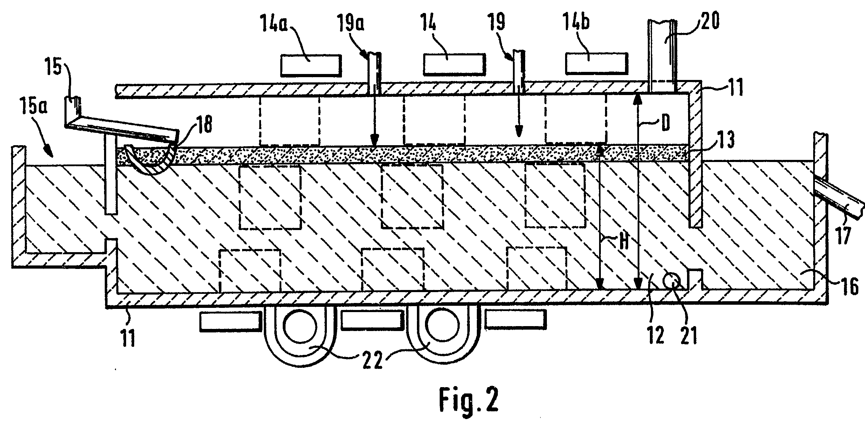

Figur 2 zeigt einen ähnlichen Ofen wie Figur 1, wobei jedoch die Induktoren helikoidal angeordnet sind, wobei eine Arbeit im Gegenstrom begünstigt wird, da das Metall durch die Induktoren verstärkt von links nach rechts bewegt wird, wobei die Schlacke von rechts nach links verdrängt wird.

Auch normale Torpedopfannen, welche normalerweise zum Transport von Roheisen zwischen Hochofen und Stahlwerk eingesetzt werden, können zur Metallbehandlung insbesondere zur Entschwefelung im Rahmen der Erfindung eingesetzt werden. In diesem Fall können die Pfannen, welche nicht ganz gefüllt werden und einen freien Raum von mindestens 25 cm von Oberkante Roheisen bis Pfannengewölbe haben sollten, mit Induktoren nach Figur 1 oder 2 direkt bestückt sein oder in eine Vorrichtung eingeführt werden, welche mit solchen Induktoren bestückt ist und diese Induktoren an die Pfannenwand heranfahren kann. Bei Inbetriebnahme der Induktoren wird, wie vorher beschrieben, das Roheisen an den Scheitel herangeführt und fällt auf das mit bekannten Zusätzen wie Soda, Calcium-Carbid, Kalkstaub oder Gemische dieser Stoffe beaufschlagte Bad, wobei eine intensive Mischung und Reaktionsfähigkeit dieser Stoffe mit dem Roheisenbad erzeugt wird.

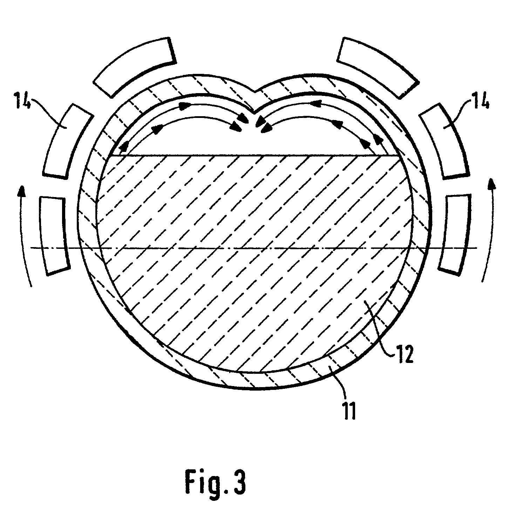

Ein weiteres sehr interessantes Anwendungsgebiet der Erfindung besteht in der Behandlung von Giessereiroheisen zu Entschwefelungs- bzw. Legierungszwecken in den Vorherden der Kuppelöfen, den Transport bzw. Legierungspfannen bzw. in den Giessereitransportgefässen, mit welchen die Verteilung des Roheisens in die Giessformen vorgenommen wird. In diesem Falle können die Legierungsmittel bzw. Impfstoffe vor oder nach dem Füllen der Pfannen mit Roheisen intensiv gemischt werden, wobei die als Rinnenofen ausgebildete Pfanne mit Induktoren bestückt wird oder, wie vorher bei den Torpedopfannen beschrieben, während ein paar Minuten in einen Induktorenstand eingefahren werden und dort innig mit den Legierungs- und Impfelementen gemischt werden. In diesem Falle können, wie in Figur 3 dargestellt, die Induktoren auf beiden Seiten der Pfanne angebracht werden und in entgegengesetzter Richtung wirken, um auf diese Weise eine noch schnellere und intensivere Mischung zu erzielen.

Die Erfindung hat sich besonders bewährt bei der Beseitigung von metallhaltigen Abfallprodukten wie sie besonders bei der Stahlerzeugung bzw. bei der Müllverbrennung entstehen. Diese Abfallprodukte liegen unter Form von feinverteilten Stäuben vor, welche nur schwer zu behandeln sind. Es ist bekannt, diese Stäube, wie bereits im luxemburgischen Patent Nr 81 330 beschrieben, in ein Roheisenbad einzublasen. Dieses Verfahren ist jedoch schwer anwendbar, weil die feinverteilten Stoffe zum Teil von den Fördergasen mitgerissen und wieder ausgetragen werden. Das Verfahren nach der Erfindung ermöglicht einen innigen Kontakt zwischen Roheisen und metallhaltigen Abfallprodukten, ohne Einsatz von Fördergas. Zu diesem Zweck können die in Figuren 1 und 1b bzw. 2 beschriebenen Öfen eingesetzt werden, wobei naturgemäss der Einfüllstutzen 15 entfällt und der Ofen geschlossen wird. Das Einfüllen geschieht dann über das Siphon 15a. In diesem Falle wird der Ofen mit einem Entgasungsstutzen 20 versehen.

Das Verfahren kann sowohl im Durchlaufverfahren z.B. in der Roheisenrinne als auch als reines Behandlungsverfahren durchgeführt werden.

Als Durchlaufverfahren angewandt, wird das Roheisen durch den Siphon 15a in den Rinnenofen eingeführt, wobei die zu behandelnden Abfallprodukte durch die Stutzen 19, 19a und 19b in das System eingeführt werden. Durch die Aktionen der Induktoren wird in dem System eine innige Durchmischung herbeigeführt, wobei sämtliche Metalle reduziert werden und teils unter Dampfform durch den Stutzen 20 entweichen und teils z.B. bei Blei, sich im Roheisen ansammeln. Die dampfförmigen Metalle werden nach Verlassen des Stutzens 20 als Metall kondensiert oder nach Oxydation in normalen Filteranlagen abgeschieden. Die in den Abfallprodukten enthaltenen Eisenoxyde werden ebenfalls reduziert und verlassen das System mit dem Roheisen über den Siphon 16 und die Ausflussrinne 17. Blei wird periodisch über den Abstich 21 abgelassen. Die Schlacke verlässt das System über den Abstich 18 bzw. 18a.

Wird der Rinnenofen als reiner Behandlungsofen benutzt, so wird das Roheisen nur bis zur Füllung des Ofens eingeführt, wobei anschliessend die Behandlung durch Inbetriebnahme der Induktoren und Einführung der metallhaltigen Abfallprodukte beginnen kann. Die Behandlung ist mit der vorher beschriebenen identisch, mit der Ausnahme, dass das Roheisen durch eine eventuelle Zuführung von Kohlenstoff mit den Abfallprodukten auf einen konstanten Wert eingestellt werden sollte und die Temperatur durch geeignete Heizsysteme z.B. durch den oder die Kanalinduktoren 22 aufrechterhalten werden muss. Die Mischinduktoren können ebenfalls so ausgelegt werden, dass sie gleichzeitig als Heizinduktoren wirken.

Eines der wichtigsten und bei allen Ausführungen auftretendes Merkmal ist, dass die Metallschmelze bis etwa zum Scheitel der zylindrischen Gefässoder Ofenwand durch induktive Drehung angehoben wird und anschliessend auf das Metallbad zurückfällt bzw. zurückgefördert wird. Dadurch entsteht in der Metallschmelze eine doppelte Turbulenz, welche eine kräftige Durchmischung begünstigt.

Der Füllstand des Gefässes spielt dabei eine wesentliche Rolle im Hinblick auf den Wirkungsgrad, d.h. eine möglichst kräftige Turbulenz mit möglichst wenig Energieaufwand. Wird die Füllstandshöhe mit H bezeichnet und der Ofendurchmesser mit D, so wird der beste Wirkungsgrad erreicht, wenn der Füllungsgrad $\emptyset = H/D$ zwischen 0,75 und 0,90 liegt.

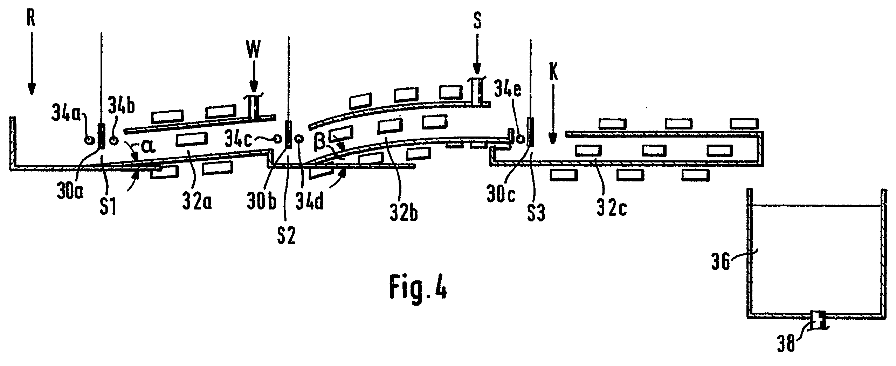

Figur 4 zeigt das Schema einer Rinnenanlage, welche gleichzeitig desiliziert, entphosphort und entschwefelt. Sie begreift drei Siphons S1, S2 und S3 mit drei Siphonwänden 30a, 30b und 30c, sowie drei Mischstrecken mit Mischvorrichtungen 32a, 32b und 32c. Eine derartige Anlage kann in der Hochofenrinne zwischen Hochofen und Transportpfanne eingesetzt werden, sie kann jedoch auch als Zwischenorgan zwischen Torpedopfanne und Stahlwerkspfanne eingesetzt werden. Das Roheisen R wird bspw. aus einer Roheisenpfanne in die erste Siphonvorrichtung gekippt, von wo die Schlacke durch die Öffnung 34a abfliessen kann. Nach Durchlaufen der Siphonwand 30a wird das Roheisen von einer ersten elektromagnetischen erfindungsgemässen Mischvorrichtung 32a erfasst und auf Grund einer helikoidalen Anordnung der Induktoren über eine Steigung α = 5° in die Siphonvorrichtung S2 befördert. Vor Erreichen dieses Siphons wird vorgewärmter Walzenzunder mit Flussmitteln W aufgegeben, welcher im Gegenstrom in Richtung zum Siphon S1 zurückfliesst und das Roheisen weitgehend entsiliziert. Diese Strecke ist entweder sauer oder mit einem hochtonerdehaltigen Futter ausgekleidet. Die hochkieselhaltige Schlacke wird durch die Öffnung 34b abgeschieden. Das Roheisen fällt in das Siphon S2, wo siliziumhaltige Schlackenreste durch die Öffnung 34c abfliessen. Nach Passieren des Siphons findet eine Entphosphorung in der nächsten elektromagnetischen Mischvorrichtung 32b statt, welche eine gekrümmte Form hat. Der untere Teil dieser Anlage in der Gegend des Siphons S2 hat eine Neigung β = 7° zur Horizontalen und flacht am oberen Ende auf 2° ab, wo die helikoidal angeordneten Mischinduktoren durch am Boden und/oder über der leicht geneigten Vorrichtung angeordnete lineare Förderinduktoren abgelöst werden. Diese Anordnungen wurden gewählt, um der Soda S, die in diesem Beispiel als Entphosphorungsmittel beigegeben wurden, die Gelegenheit zu geben, sich zu verflüssigen, ehe sie im Gegenstrom nach S2 befördert wird, wo sie ausreagiert und durch die Öffnung 34d abgelassen werden kann. Die Entphosphorungsreaktion wird in der Mischvorrichtung durch Einleiten von Sauerstoff oder sauerstoffhaltigen Gasen unterstützt (nicht gezeigt). Nach weitgehender Entphosphorung fliesst das behandelte Roheisen in die Siphonvorrichtung S3, wo zurückgebliebene Schlackenspuren durch die Öffnung 34e abfliessen können. Nach Passieren des Siphons S3 tritt das Roheisen in die Horizontale oder stromabwärts leicht nach unten geneigte (1 bis 3°) elektromagnetische Mischanlage 32c ein, wo eine Zugabe von Kalziumkarbid K gleich hinter der Siphonwand 30c erfolgt. Nach Verlassen der Vorrichtung 32c fliesst das Roheisen mit seiner Entschwefelungsschlacke in eine Pfanne 36, wo eventuell noch eine durch Spülgas 38 unterstützte Nachentschwefelung erfolgen kann. Hauptzweck dieser Operation ist allerdings, das Roheisen durch die Entschwefelungsschlackenschicht vor Strahlungsverlusten zu schützen. Im Falle wo man die Entschwefelungsschlacke ebenfalls automatisch abziehen möchte, würde man die elektromagnetische Mischanlage 32c um etwa 7° neigen und das Kalziumkarbid kurz vor dem Austrittsende zugeben und die Schlacke in einem im Siphon S3 anzubringenden Schlackenabzug abscheiden. Die Entschwefelungswirkung kann in der Anlage 32c durch Eindüsen kleiner Mengen reduzierender Gase unterstützt werden.

Die Anlagen 32b und 32c sind vorzugsweise mit einer basischen Auskleidung zu versehen.

Ausserdem wurde festgestellt, dass die Wirkung der elektromagnetischen Kraft, welche die Drehbewegung der Schmelze erwirkt, wesentlich erhöht werden kann, indem man einen elektrischen Strom durch die Achse des zu bewegenden Metallbades leitet. Dieser Strom wird vorteilhafterweise durch Elektroden (nicht gezeigt), welche sich vor und nach der zu bewegenden Stelle befinden, in das Metallbad eingeleitet. Der Strom kann Drehstrom oder Gleichstrom sein, wobei jedoch die höchste Effizienz mit Gleichstrom erreicht wird.

Zusätzlich wurde gefunden, dass eine Veränderung der Stromzufuhr der Induktoren durch eine Überlagerung der normalen Stromzufuhr mit Impulsströmen bzw. durch kurzzeitige Frequenzveränderungen den Mischeffekt wesentlich erhöht.

Das erfindungsgemässe Verfahren bezieht sich nicht nur auf längergestreckte Öfen sondern auch auf andere Öfen oder Pfannen, in welchen jeweils nur Teilmengen entnommen und in den Ofen zurückgegeben werden oder Öfen, welche gemeinsam derart betrieben werden, dass ein kontinuierliches Verfahren entsteht.

Diese Vorrichtungen bzw. Verfahren, welche einerseits die Behandlung von Teilmengen und andererseits die Benutzung mehrerer verbundener Öfen betreffen, werden nachfolgend näher beschrieben.

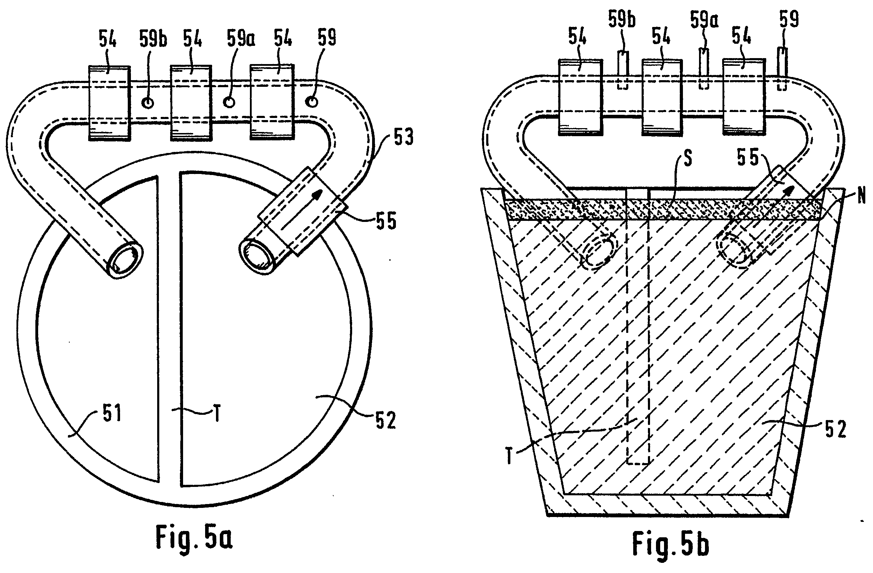

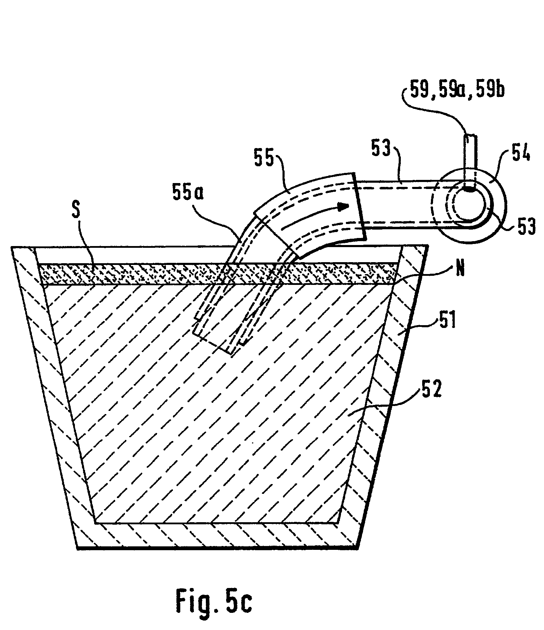

Betreffend eine mögliche Anlage zur Behandlung von Teilmengen verweisen wir auf die Figur 5a, welche eine Draufsicht darstellt, auf die Figur 5b, welche eine frontale Seitenansicht darstellt und die Figur 5c, welche einen Schnitt mit Seitenansicht kombiniert.

In diesen drei Zeichnungen enthält die mit feuerfesten Stoffen ausgekleidete Pfanne oder Ofen 51 das Metall 52, welches die Pfanne bis zu dem Niveau N füllt. Auf dem Metallbad schwimmt normalerweise ein Schlackenfilm bzw. eine Schlackenschicht S.

Will man das Metall 52 behandeln z.B. durch Zusatz von Entschwefelungsmitteln wie bei Stahl und Roheisen häufig angewandt, wird die Vorrichtung 53 in das Metallbad eingeführt, wobei in den meisten Fällen dafür Sorge getragen werden muss, dass die Schlacke nicht in die Vorrichtung eindringt. Nach dem Einführen des Ein- und eventuell des Auslaufes der Vorrichtung in das Bad wird die Vorrichtung 53 mit Metall gefüllt. Dieses Füllen kann durch Einschalten des oder der Induktoren 55 bewirkt werden, welche derart ausgebildet sind, dass sie eine Pumpwirkung auf das Metallbad ausüben, und so das Metall in die mit den Behandlungsinduktoren 54 versehene Mischstrecke befördern.

Die Arbeitsweise der Induktoren 54 entspricht derjenigen, welche bereits beschrieben wurde, wobei in diesem Falle die Induktoren bevorzugt derart ausgebildet sind, dass sie für eine Förderung des Metalls von rechts nach links gesehen Sorge tragen. Auch können sie derart ausgebildet sein, dass sie zusätzlich zu der Misch- und Förderwirkung einen Aufheizeffekt bewirken. In dem Moment, wo das Metall die Induktoren 54 erreicht und durch diese Induktoren in eine innige Mischbewegung versetzt wird, können die zur Behandlung benötigten Fest- oder Flüssigstoffe bzw. Gase durch die Öffnungen bzw. Düsen 59, 59a und 59b dem Metallbad zugeführt werden und mit diesem innig vermischt werden.

Will man die behandelte Menge von den unbehandelten trennen, so kann man die Pfanne mit einer unten geöffneten Trennwand T versehen.

Ein ähnliche Vorrichtung wie die eben beschriebene besteht darin, dass die mit den Induktoren versehene Mischstrecke direkt, d.h. ohne die mit dem Hebeinduktor 55 versehene Steigstrecke, mit einem oder zwei in der Pfanne angebrachten und eventuell mit Schieberverschlüssen versehenen Öffnungen verbunden wäre, was zu einem ähnlichen Ergebnis wie vorher beschrieben führen würde. Eine derartige Vorrichtung führt bei Kipp-Pfannen und insbesondere bei Torpedopfannen zu sehr günstigen Ergebnissen. In diesen Fällen ist das Füllen der Mischvorrichtung durch einfaches Kippen der Pfanne problemlos zu erreichen, wobei, bei einer genügenden Pump- und Hebewirkung der Induktoren 54, das Füllen durch Überlaufen in die Pfannen durch eine normale Öffnung erreicht werden kann.

Die soeben beschriebene Mischstrecke mit direktem Kontakt mit dem Metall, also ohne Hebeinduktor, könnte an die in der EP-B1 0 094 334 beschriebene Vorrichtung zum Behandeln von Metallschmelzen vor dem Giessen angebracht werden, wobei das in dieser Patentanmeldung beschriebene Aufheizen mit einer gleichzeitigen Behandlung des Metalls nach vorliegender Erfindung kombiniert werden kann.

In Figuren 5a, 5b und 5c wird eine Vorrichtung gezeigt, in welcher durch einen magnetischen Pumpeffekt das zu behandelnde Metall aus einer Pfanne in die erfindungsgemässe Mischvorrichtung befördert wird.

Der magnetische Pumpeffekt kann durch andere bekannte Mittel unterstützt bzw. ersetzt werden. So kann, wie weiter an Hand eines Beispieles für Torpedopfannen beschrieben, der magnetische Pumpeffekt durch einen Überdruck in der Pfanne, durch einen Gashebereffekt bzw. durch Vakuum unterstützt bzw. ersetzt werden, wobei die vier erwähnten Mittel, d.h. Überdruck in der Pfanne, Gashebereffekt, Vakuum, elektroinduktives Pumpen allein oder in Kombination der einzelnen oder verschiedener bzw. aller erwähnten Mittel eingesetzt werden können.

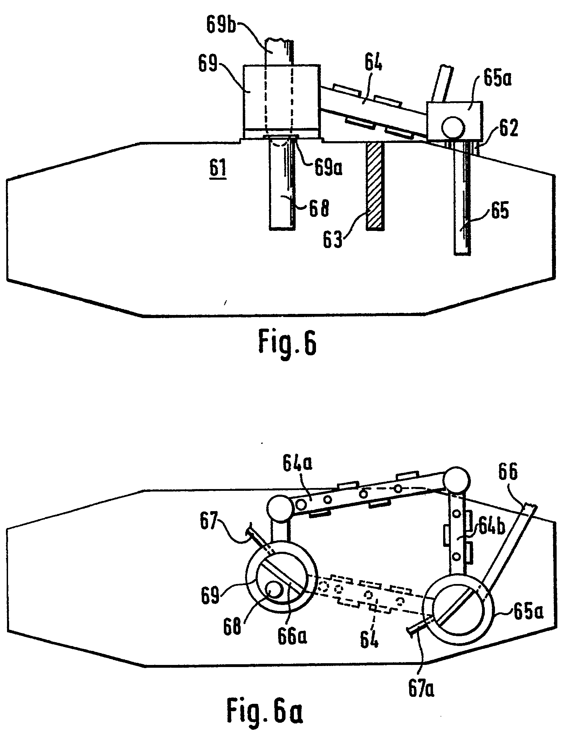

Die Figuren 6 und 6a beschreiben eine derartige Anlage im Zusammenhang mit Torpedopfannen, in welcher die gewünschten Operationen wie Entsilizierung, Entschwefelung, Entphosphorung, nacheinander durchgeführt werden können.

Diese Torpedopfanne besitzt neben ihrem normalen Einguss eine zweite Öffnung 62, wobei beide Öffnungen vorzugsweise gasdicht abgeschlossen werden können. Falls dies nicht möglich ist, ist eine Trennwand 63, welche etwa bis zur Mitte der Torpedopfanne reicht, vorgesehen.

Die Vorrichtung begreift ein Steigrohr 65, welches bis kurz oberhalb des Bodens der Torpedopfanne hineinragt und vorzugsweise mit einer Gasheberanlage versehen ist. Der Oberteil des Steigrohres kann mit einer Ansaugleitung 66 versehen sein. Die in Figur 5 dargestellte elektromagnetische Pumpe kann ebenfalls in dem Steigrohr 65 eingebaut sein. Die Torpedopfanne selbst kann mit einem leichten Überdruck beaufschlagt werden, derart dass das Roheisen das Rohr 65 füllt und in die Mischstrecken 64 oder 64a und 64b gelangt. Falls die Torpedopfanne in ihrem Einlauf nicht leicht abzudichten ist, genügt es, nach Einbau der Zwischenwand 63 nur den rechten Teil der Torpedopfanne unter Überdruck zu setzen. In den normalen Einführstutzen der Torpedopfanne, 61 wird die mit dem ganzen System verbundene Einfüll- oder Siphonvorrichtung 69 eingeführt. Diese Vorrichtung besteht aus einem Siphongefäss mit einer Trennwand, einem Pfanneneinführstutzen 68, und einem Schlackenüberlauf 67. Der Stutzen 68 kann mit einem Durchschmelzblech 69a bzw. mit einem Stopfen 69b am Anfang der Operation verschlossen sein.

Die elektromagnetische Mischstrecke 64 kann direkt von 65a nach 69 leiten, wie in der oberen Darstellung von Figur 6 und in der unteren Darstellung von Figur 6a gestrichelt angezeigt. Die Mischstrecke kann jedoch, auch um einen grösseren Mischweg zu erreichen, über den Umweg 64a und 64b, von 65 nach 69 gelangen. Die Arbeitsweise des als Ganzes mittels Hebe- und Senkvorrichtung in die Torpedopfanne eingebrachten Systems ist aus Figur 6 und aus der nachfolgenden Beschreibung leicht ersichtlich:

Das zu behandelnde Roheisen wird über das Rohr 65 mit einem oder mehreren der oben beschriebenen vier Mittel nach 65a hochgehoben, wo es dann über die Mischstrecken 64, oder 64a und 64b unter Zugabe der behandelnden bekannten Stoffe oder Gase kontinuierlich in die Siphonvorrichtung 69 befördert wird, welche nach Füllen und Durchschmelzen von 69a bzw. Heben von 69b das Roheisen nach Behandlung in die Torpedopfanne über 68 zurückfliessen lässt.

Die bei der Behandlung entstandene Schlacke fliesst automatisch über dem Überlauf 67 ab, so dass ohne Probleme die Behandlungen wie Entschweflung, Entsilizierung und Entphosphorung nacheinander durchgeführt werden können.

Haben die Mischstrecken 64, oder 64a und 64b eine genügende Steigung z.B. über 2°, derart dass die Schlacke nicht mit dem Metallstrom mitgerissen wird, so kann im Gegenstrom gearbeitet werden, wobei die Aufgabe der Zusätze jeweils an den Mischstreckenenden erfolgt und die Schlacke über den Überlauf 67a aus dem als Siphon ausgebildeten Stutzen 65a ausläuft.

Es ist möglich, die auf der rechten Pfannenseite angebrachte Anlage symmetrisch auf der linken Pfannenseite anzubringen, wobei beide Anlagen zusammenarbeiten können unter Benutzung derselben Siphonvorrichtung 69.

Wie in der Darstellung angedeutet, ist es bei einzelnen Torpedopfannen möglich, den Stutzen 62 derart in den konischen Teil anzubringen, dass er sich beim Rückwärtskippen der Torpedopfanne automatisch mit Metall füllt, wobei dieses Metall dann über 65a in die Mischvorrichtung geführt wird, und dann wie beschrieben weiterlaufen kann. In diesem Falle können die vorerst vier beschriebenen Hebemittel umgangen werden.

Die soeben beschriebene Vorrichtung könnte ebenfalls in normalen, Roheisen, Stahl oder andere Metalle enthaltenden Pfannen angewandt werden.

Es ist leicht ersichtlich, dass mit Bezug auf die Figuren 5a, 5b, 5c und 6 beschriebenen Vorrichtungen die vielfältigsten metallurgischen Operationen möglich werden.

So können bei Roheisen die gewünschten Operationen wie Entsilizierung, Entphosphorung und Entschwefelung vorzugsweise nacheinander in derselben Pfanne wie z.B. Torpedopfannen mit derselben Vorrichtung mit an sich bekannten Mitteln durchgeführt werden. Die einzelnen Operationen werden durch das automatische Zwischenabschlacken begünstigt.

Auch Operationen wie die mit Bezug auf Figur 1 beschriebene Behandlung von Zink und Blei enthaltenden Abfallprodukten mit Roheisen können ebenfalls in den beschriebenen Anlagen verwirklicht werden.

Auch Stahlbäder können auf diese beschriebene Art im Erzeugungsofen selbst oder der Giesspfanne bzw. Zwischenpfanne mit der beschriebenen Vorrichtung mit bekannten Mitteln behandelt werden. So können z.B. Stahlbäder mit pulverförmigen Legierungselementen leichl legiert werden, bzw. mit bekannten Behandlungsschlacken wie z.B. feste oder flüssige Perrin-Schlacken entschwefelt bzw. desoxydiert werden.

Dieselben Vorrichtungen können zum Schnellaufheizen von Stahlschmelzen durch Aluminothermie eingesetzt werden. Dieses Verfahren, welches ein Schnellaufheizen des Bades mit einem Behandlungseffekt der gleichzeitig erzeugten Schlacke kombiniert, wurde in EP-B1 0 110 809 beschrieben.

Die in diesem Verfahren beschriebene Reaktion kann mit der soeben unter Figuren 5a, 5b oder 5c beschriebenen Vorrichtung nach der Erfindung kombiniert werden, wobei die Aluminiumzugabe z.B. durch die Düse 59 erfolgen kann, und der anschliessend benötigte Sauerstoff durch die Düsen 59a und 59b eingeführt wird. Die durch die Vorrichtung nach der Erfindung erzielbare innige Durchmischung zwischen dem mit Aluminium behandelten Stahl und dem nachträglich eingebrachten Sauerstoff führt zu einem sehr schnellen Aufheizeffekt, verbunden mit einem gleichzeitigen Reinigungseffekt durch die bei der Reaktion erzeugte Schlacke.

Bei komplexen Reaktionen wie z.B. bei der Kohlenvergasung im Roheisenbad mit gleichzeitiger Entschwefelung, bei der Direktreduktion mit gleichzeitiger Roheisenerzeugung, oder bei den in der Nichteisenmetallurgie angewandten Verfahren ist es vorteilhaft, das Verfahren bzw. die Vorrichtung nach der Erfindung als Zwischenglied zwischen zwei oder mehreren im Verbund arbeitenden Öfen einzusetzen. Diese mit grossen Vorteilen verbundene Anwendungsart der Erfindung wird an folgenden zwei Beispielen näher beschrieben.

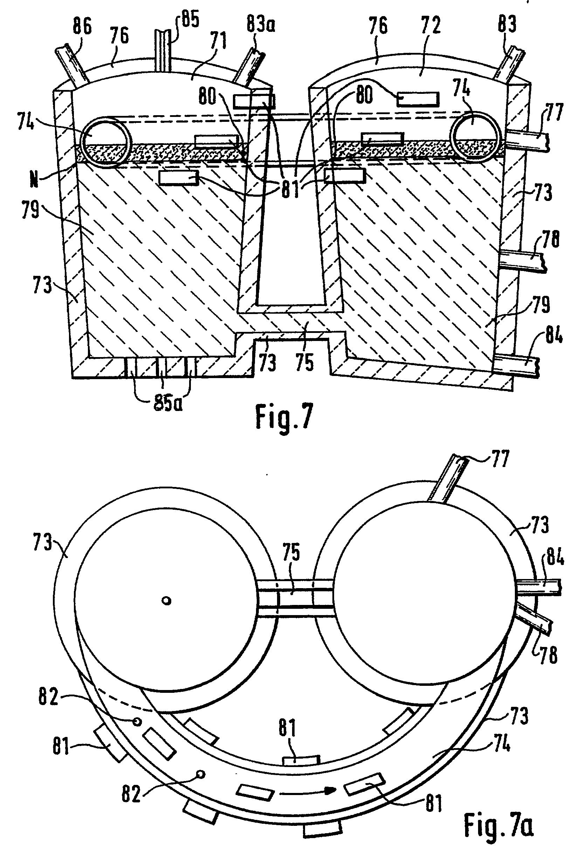

Das erste Beispiel ist in den Figuren 7 und 7a dargestellt und bezieht sich auf eine Kohlenvergasungsanlage von Kohlen mit relativ niedrigem Schwefelgehalt. Die Anlage besteht im Prinzip aus zwei Behältern 71 und 72, welche im Oberteil mit der Mischstrecke 74 verbunden sind. Ein Rohr 75 verbindet die zwei Gefässe in ihrem Unterteil. Die Anlage ist insgesamt mit einer feuerfesten Auskleidung 73 versehen. Die Anlage ist mit den Deckeln 76 geschlossen, derart, dass sie auch unter Druck arbeiten kann.

Das Gefäss 7 ist mit einer Lanze 85 ausgerüstet, welche Sauerstoff gegebenenfalls mit Kalkstaub auf das mit 79 bezeichnete Roheisenbad bläst. Der Sauerstoff, eventuell mit Kalkzusatz, kann auch durch Bodendüsen 85a, welche Düsen als öl- bzw. gasgekühlte Ringspaltdüsen ausgebildet sind, dem Roheisenbad 79 zugeführt werden.

Durch diese Sauerstoffzufuhr entsteht das Gas durch Verbrennen des im Roheisen enthaltenen Kohlenstoffs. Die dabei entstehende Wärme kann durch Zusatz von Wasserdampf zu dem eingeblasenen Sauerstoff geregelt werden. Die dabei auftretende Wärme kann auch dazu benutzt werden, Schrott bzw. vorreduzierte Erze, welche durch die Öffnung 86 in das Gefäss 71 eingebracht werden, einzuschmelzen. Die erzeugten Gase können übrigens ganz oder teilweise zur Vorreduktion von Erzen eingesetzt werden.

Das Kernstück der Anlage ist die Mischstrecke in Form einer Verbindungsrinne 74, welche als elektroinduktive Mischvorrichtung, wie in bezug auf Figur 1 beschrieben, ausgebildet ist. Diese Rinne, welche naturgemäss aus einem magnetisch permeablen Mantel, wie z.B. amagnetischer Stahl, oder vorteilhafterweise aus einem amagnetischen Verbundwerkstoff bestehen sollte, ist innenseitig mit einem hochfeuerfesten und abriebfesten Stoff ausgekleidet. Diese Rinne 74 sollte derart ausgelegt sein, dass das Metall 79 von 71 nach 72 gefördert wird. Zu diesem Zweck sind der oder die Induktoren 81 derart ausgebildet, dass sie zusätzlich zu ihrem intensiven Mischeffekt eine Förderwirkung des Metalls von 71 nach 72 bewirken. Die Rinne 74 verfügt über die Einfüllstutzen 82, durch welche der Kohlenstoff in das System eingeführt wird.

Wie in den Figuren dargestellt kann die Rinne 74 in dem Ofen 71 derart angebracht sein, dass die Schlacke, in diesem Falle eine Entschwefelungsschlacke, welche hauptsächlich aus Kalk mit eventuell einem Flussspathzusatz besteht, von 71 nach 72 gefördert wird. Auf diese Weise wird die durch 82 eingeführte Kohle sofort mit der vorgeschmolzenen Entschwefelungsschlacke und dem Roheisen in Verbindung gebracht, derart, dass das Roheisen durch den Kohlenstoff nicht nur aufgekohlt wird, sondern gleichzeitig entschwefelt wird.

Die flüchtigen Bestandteile der Kohle können nach dieser Arbeitsweise getrennt über die Gasleitung 83 zusammen mit den wertvollen Teeren als Reichgas abgeführt werden, wobei das durch die Sauerstoff-Wasserdampfeindüsung in 71 entstehende Gas über 83a abgeführt werden kann. Will man eine scharfe Trennung der Gase haben, muss man das Verbindungs- und Mischrohr 74 in dem Gefäss 71 unter dem Badspiegel einführen. In diesem Falle muss man allerdings auf die Flüssigschlackenentschwefelungswirkung verzichten und die Entschwefelungsmittel mit der Kohle einführen.

Will man nur ein Mischgas gewinnen, so wird die Abgasleitung 83 geschlossen und sämtliche Gase über 83a abgeführt. Die Teere werden dann in dem heissen Gasraum über dem Bad 79 im Gefäss 71 gekrackt.

Die Schlacken 80 verlassen das System über einen Auslauf 77 eventuell zusammen mit einem leichten Roheisenüberschuss. Wird mit Schrott bzw. mit vorreduziertem Erz gekühlt, so wird das aus diesen Stoffen entstehende Roheisen über die Stichlöcher 78 oder 84 abgestochen.

Da durch die Mischrinne 74 Roheisen kontinuierlich von 71 nach 72 gefördert wird und über das Verbindungsrohr 75 zum Gefäss 71 zurückfliesst, arbeitet die Anlage kontinuierlich.

Die in den Figuren 7 und 7a dargestellte Anlage kann für die verschiedensten metallurgischen Arbeiten eingesetzt werden.

So kann diese Anlage für die Behandlung von Blei und Zink enthaltenden metallurgischen Abfällen, wie bereits beschrieben, benutzt werden, wobei in dieser Anlage das elektrische Aufheizen durch Kohlenstoffverbrennung mittels Sauerstoff ersetzt wird. In diesem Falle wird der Verbindungsstutzen der Misch- und Förderrinne 74 in das Gefäss 71 unter den Badspiegel N verlegt, und die zu behandelnden Stoffe werden, eventuell mit Kohlenstoffzusatz, durch 82 eingeführt. Die Blei und Zink enthaltenden Gase verlassen das System über den Stutzen der Abgasleitung 83. Die Temperatur wird durch Eindüsen von kleineren Sauerstoffmengen über die Lanze 85 und/oder über die Bodendüsen 85a geregelt. Die Schlacke verlässt, eventuell mit Roheisen, das Gefäss 72 über den überlauf 77, Roheisen kann über den Ablauf 78 oder zusammen mit Blei über den Ablauf 84 abgeführt werden.

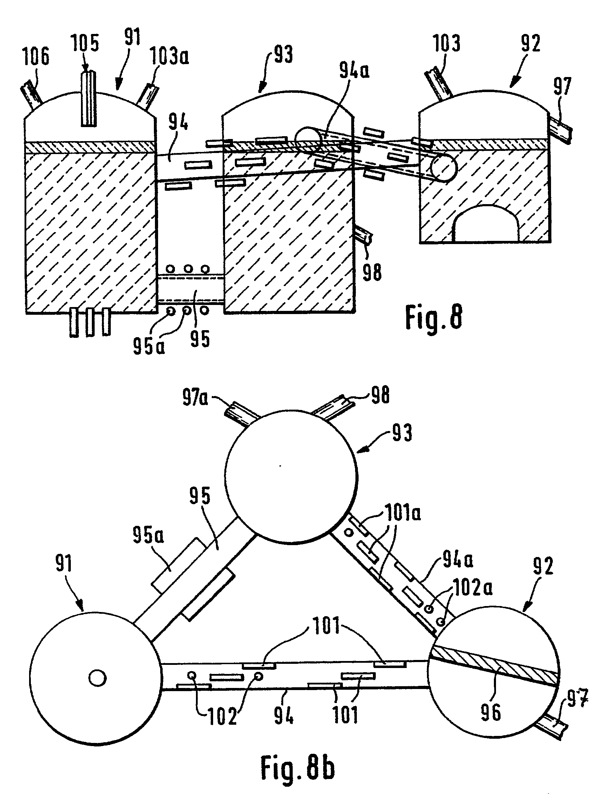

Die Figuren 8 und 8b stellen schematisch eine Anlage mit drei Behältern 91, 92, 93 und zwei Mischstrecken 94, 94a dar. Diese Anlage erlaubt bereits komplexere Behandlungen wie z.B. Vergasung von Kohlen mit höherem Schwefelgehalt und gleichzeitiger Zementherstellung.

In dem Behälter mit Gaszuführlanze 105, Einführöffnung 86 und Gasableitung 83a wird wie bei dem vorherigen Beispiel Kohle mit Sauerstoff und ggf. Wasserdampf vergast. In der Mischstrecke 94 wird der Kohlenstoff mit Kalkstaub durch die Stutzen 102 eingeführt und durch die beschriebene Wirkung der Induktoren 101 intensiv mit dem Roheisen gemischt. Der Kalkzusatz ist derart berechnet, dass sich mit der Kohlenasche eine für die Zementherstellung geeignete Zusammensetzung ergibt. Die so entstandene Schlacke wird aus dem Behälter 92 über eine Rinne 97 abgeschieden, wobei ggf. eine unten unterbrochene Siphonwand 96 das Mitreissen dieser Schlacke in die Mischstrecke 94a verhindert.

In dieser Mischstrecke 94a wird die Hauptentschwefelung vorgenommen, wobei durch die Stutzen 102a bekannte Entschwefelungsmittel wie z.B. Soda oder Kalkflussspathgemische eingeführt werden und durch die Wirkung der Induktoren 101a innig mit dem Roheisen vermischt werden. Die entstandene Entschwefelungsschlacke wird über 97a aus dem Behälter 93 abgeschieden, wobei das Roheisen über 95 in das Gefäss 91 zurückfliesst. Die zurückfliessende Menge kann über das Magnet- und Pumpventil 95a gesteuert werden.

Die erzeugten Gase bzw. das Roheisen werden wie in Figur 7 gezeigt dem System entnommen.

Bei noch komplexeren Metallbehandlungen wie in der Nichteisenmetallurgie üblich kann die Zahl der Gefässe und der induktiven Misohrinnen nach Belieben gesteigert werden.

Wie in Figur 8b dargestellt sind diese Rinnen als geradlinige Rohre ausgebildet, was im Gegensatz zu der Ausführung von Figur 7a die Ausmauerung dieser Rinnen wesentlich erleichtert. Die in Figur 7a dargestellte kreisbogenförmige Rinne könnte mit gutem Erfolg durch eine geradlinige Rinne ersetzt werden.

Es fällt nicht aus dem Rahmen dieser Erfindung ggf. z.B. bei aschenreicher Kohle dem System zusätzlich Energie z.B. in Form von elektrischer Energie mittels Induktionsspulen oder Lichtbögen bzw. über die Behandlungsinduktoren selbst zuzuführen.

## Patentansprüche

1. Verfahren zum Behandeln von Metallschmelzen durch Zugabe von chemisch aktiven Substanzen oder Legierungselementen, wobei die Metallschmelze in einem geeigneten im wesentlich zylinderförmigen Gefäss mittels elektromagnetischer Kraft in Bewegung gesetzt wird, dadurch gekennzeichnet, dass das Gefäss mindestens bis über die Hälfte mit der zu behandelnden Schmelze gefüllt ist, dass die Schmelze durch eine Drehbewegung um die Gefässachse bis zum Gefässscheitel gehoben und anschliessend im wesentlichen in Richtung Gefässachse auf die Schmelzoberfläche, auf welche besagte Substanzen oder Elemente aufgegeben worden sind, zurückfallen gelassen wird bzw. zurückbefördert wird.

2. Verfahren nach Anspruch 1, dadurch gekennzeichnet, dass der Füllungsgrad $\emptyset = H/D$ des Gefässes zwischen 0,75 und 0,90 liegt, wobei H und D die Fullstandhöhe der Schmelze bzw. den Gefässdurchmesser darstellen.

3. Verfahren nach einem der Ansprüche 1 oder 2, dadurch gekennzeichnet, dass die Schmelze entlang der gesamten Gefässlänge in einheitlichen Drehsinn bewegt wird.

4. Verfahren nach einem der Ansprüche 1 oder 2, dadurch gekennzeichnet, dass entlang der Gefässlänge zumindest zwei Zonen vorgesehen sind, in denen die Schmelze in jeweils entgegengesetzten Richtungen bewegt wird.

5. Verfahren nach einem der Ansprüche 1–4, dadurch gekennzeichnet, dass die induktiv bewirkte Durchmischung durch mechanische Kräfte unterstützt wird.

6. Verfahren nach einem der Ansprüche 1 bis 5, dadurch gekennzeichnet, dass mittels der elektromagnetischen Kraft, mit welcher die Drehbewegung hervorgerufen wird, eine zusätzliche Axialbewegung der Metallschmelze zustande gebracht wird und auf diese Weise eine Mischstrecke gebildet wird.

7. Verfahren nach dem Anspruch 6, dadurch gekennzeichnet, dass die Mischstrecke durch Neigen des Gefässes bzw. des Durchflussorgans in Stromrichtung steigend ausgebildet ist und dass durch Aufbringen der Stoffe am Mischstreckenende eine Gegenströmung zwischen der steigenden Metallschmelze und dem fallenden Stoffzusatz hervorgerufen wird.

8. Verfahren nach einem der Ansprüche 6 oder 7, dadurch gekennzeichnet, dass im Bereich der Mischstrecke elektrischer Strom, vorzugsweise Gleichstrom, durch die Schmelze geleitet wird.

9. Verfahren nach einem der Ansprüche 6 bis 8, dadurch gekennzeichnet, dass einem metallurgischen Gefäss eine Teilmenge entnommen wird, diese in zumindest einer Mischstrecke behandelt und in das gleiche Gefäss zurückbefördert wird.

10. Verfahren nach einem der Ansprüche 6 bis 8, dadurch gekennzeichnet, dass einem metallurgischen Gefäss eine Teilmenge entnommen wird, diese in der Mischstrecke behandelt und in ein zweites Gefäss befördert wird.

11. Vorrichtung zum Durchführen des Verfahrens nach einem der Ansprüche 1 bis 10, dadurch gekennzeichnet, dass ausserhalb der Wand des zylindrischen horizontalen oder leicht geneigten Gefässes (1) Induktoren (14) angeordnet sind, welche auf die Metallschmelze (2) sowohl Dreh- wie Axialkräfte ausüben, und dass das Gefäss (1) mit Mitteln (19) versehen ist, um Zusatzsubstanzen auf die Metalloberfläche beizugeben.

12. Vorrichtung nach dem Anspruch 11, dadurch gekennzeichnet, dass mehrere Induktoren (14, 14a, 14b) parallel zur Gefässachse angeordnet sind.

13. Vorrichtung nach dem Anspruch 11, dadurch gekennzeichnet, dass mehrere Induktoren (14, 14a, 14b) gemäss einer helikoidal um die Gefässachse verlaufenden Linie angeordnet sind.

14. Vorrichtung nach einem der Ansprüche 11–13, dadurch gekennzeichnet, dass das Gefäss (1) ein geschlossener, rohrförmiger Ofen ist.

15. Vorrichtung nach einem der Ansprüche 11–13, dadurch gekennzeichnet, dass das Gefäss (1) ein offener Rinnenofen ist.

16. Vorrichtung nach einem der Ansprüche 11–15, dadurch gekennzeichnet, dass das Gefäss (1) durch Zwischenwände kompartimentiert ist, wobei zwischen den Kompartimenten Verbindungen vorgesehen sind.

17. Vorrichtung nach einem der Ansprüche 11–16, dadurch gekennzeichnet, dass das Gefäss (1) einen Stutzen (20) zum Abziehen von verdampfen oder vergasten Stoffen aufweist.

18. Vorrichtung nach einem der Ansprüche 11–16, dadurch gekennzeichnet, dass das Gefäss Mittel zum Beheizen des Bades, vorzugsweise Kanalinduktoren aufweist.

19. Vorrichtung nach einem der Ansprüche, 11–18, dadurch gekennzeichnet, dass die Induktoren so ausgelegt sind, dass sie gleichzeitig als Misch- und Heizinduktoren wirken.

20. Vorrichtung nach einem der Ansprüche 11–19, dadurch gekennzeichnet, dass die Stromversorgung der Induktoren Mittel begreift zum Überlagern der normalen Stromzufuhr mit Impulsströmen bzw. zum kurzzeitigen Verändern der Stromfrequenz.

21. Vorrichtung nach den Ansprüchen 11–20, dadurch gekennzeichnet, dass das Durchflussorgan in Verbindung mit einem Metalleinlauf und einem Metallauslauf geneigt angeordnet ist, wobei der Metallauslauf sich auf der höheren Ebene befindet.

22. Vorrichtung nach einem der Ansprüche 11–20, dadurch gekennzeichnet, dass die Mischstrecke (53), in welcher die Metallschmelze induktiv bewegt wird, sich zwischen den beiden Teilen eines Gefässes (51) erstreckt, das durch eine Wand (T) in zwei Teile aufgeteilt ist.

23. Vorrichtung nach einem der Ansprüche 11–20, dadurch gekennzeichnet, dass die Mischstrecke (74) zwei Gefässe (71, 72) miteinander verbindet und dass im Hinblick auf eine Metallumwälzung die Unterteile der beiden metallurgischen Gefässe (71, 72) durch ein Rohr (75) miteinander verbunden sind.

24. Vorrichtung nach einem der Ansprüche 11–20, dadurch gekennzeichnet, dass mehrere metallurgische Gefässe (91, 92, 93) mittels mehrerer Mischstrecken (94, 94a) untereinander verbunden sind, wobei in den einzelnen Gefässen (91, 92, 93) und Mischstrecken (94, 94a) verschiedenartige metallurgische Reaktionen durchgeführt werden.

25. Vorrichtung nach einem der Ansprüche 11–20, dadurch gekennzeichnet, dass mehrere Mischstrecken (32a, 32b, 32c) hintereinander angeordnet sind, und dass in jeder Mischstrecke (32a, 32b, 32c) eine spezifische metallurgische Behandlung durchgeführt wird, wobei zwischen den einzelnen Mischstrecken Siphonsysteme (S1, S2, S3) mit Abführungsstutzen (34) zum Entfernen von Reaktionsschlacken bzw. Abgasen angeordnet sind.

26. Vorrichtung nach einem der Ansprüche 11–25, dadurch gekennzeichnet, dass die Mischstrecke geradlinig ausgeführt wird.

27. Vorrichtung nach einem der Ansprüchen 11–25, dadurch gekennzeichnet, dass die Mischstrecke gekrümmt ausgeführt ist.

28. Vorrichtung nach einem der Ansprüche 11–25, dadurch gekennzeichnet, dass das Gefäss bzw. die Mischstrecke kippbar ausgeführt ist.

29. Vorrichtung nach einem der Ansprüche 11–25, dadurch gekennzeichnet, dass das Gefäss bzw. die Mischstrecke mit kooperierenden metallurgischen Gefässen, die selbst kippbar ausgeführt sind, verbunden ist.

## Claims

1. Method for treating metal melts by the addition of chemically active substances or alloying elements, the metal melts being set in motion in a suitable, substantially cylindrical vessel by means of electromagnetic force, characterized in that the vessel is filled at least to above half-way with the melt to be treated, in that the melt is raised to the apex of the vessel by a rotational movement about the axis of the vessel and then is allowed to fall back, or is conveyed back, substantially in the direction of the axis of the vessel, onto the surface of the melt, on which the said substances or elements have been added.

2. Method according to Claim 1, characterized in that the degree of filling $\varnothing = H/D$ of the vessel is between 0.75 and 0.90, H and D being the filling level of the melt and the diameter of the vessel respectively.

3. Method according to one of Claims 1 and 2, characterized in that the melt is moved in a uniform direction of rotation along the entire length of the vessel.

4. Method according to one of Claims 1 and 2, characterized in that at least two zones are provided along the length of the vessel, in which zones the melt is moved in respectively opposed directions.

5. Method according to one of Claims 1–4, characterized in that the inductively effected mixing is assisted by mechanical forces.

6. Method according to one of Claims 1 to 5, characterized in that an additional axial movement of the metal melt is initiated by means of the electromagnetic force with which the rotational movement is produced, and a mixing section is formed in this way.

7. Method according to Claim 6, characterized in that the mixing section is formed by giving the vessel or the flow member an inclination which ascends in the direction of flow, and in that a counter-current is produced between the rising metal melt and the falling added substances by introducing the substances at the end of the mixing section.

8. Method according to one of Claims 6 and 7, characterized in that electrical current, preferably direct current, is passed through the melt in the region of the mixing section.

9. Method according to one of Claims 6 to 8, characterized in that a partial quantity is removed from one metallurgical vessel and this is treated in at least one mixing section and conveyed back into the same vessel.

10. Method according to one of Claims 6 to 8, characterized in that a partial quantity is removed from one metallurgical vessel and this is treated in the mixing section and conveyed into a second vessel.

11. Apparatus for carrying out the method according to one of Claims 1 to 10, characterized in that inductors (14) are arranged outside the wall of the cylindrical horizontal or slightly inclined vessel (1), which inductors exert both rotational and axial forces on the metal melt (2), and in that the vessel (1) is provided with means (19) for introducing additive substances onto the surface of the metal.

12. Apparatus according to Claim 1, characterized in that a plurality of inductors (14, 14a, 14b) are arranged parallel to the axis of the vessel.

13. Apparatus according to Claim 11, characterized in that a plurality of inductors (14, 14a, 14b) are arranged along a line which extends helically about the axis of the vessel.

14. Apparatus according to one of Claims 11–13, characterized in that the vessel (1) is a closed, tubular furnace.

15. Apparatus according to one of Claims 11–13, characterized in that the vessel (1) is an open channel-type furnace.

16. Apparatus according to one of Claims 11–15, characterized in that the vessel (1) is compartmented by partitions, connections being provided between the compartments.

17. Apparatus according to one of Claims 11–16, characterized in that the vessel (1) possesses a connector (20) for drawing off vaporized or gasified substances.

18. Method according to one of Claims 11–16, characterized in that the vessel possesses means for heating the bath, preferably channel-type inductors.

19. Apparatus according to one of Claims 11–18, characterized in that the inductors are designed in a manner such that they act simultaneously as heating and mixing inductors.

20. Apparatus according to one of Claims 11–19, characterized in that the current supply to the inductors includes means for superimposing pulsed currents on the normal current supply or for short-term alterations in the current frequency.

21. Apparatus according to one of Claims 11–20, characterized in that the flow member is inclined in combination with a metal inlet and a metal outlet, the metal outlet being situated at a higher level.

22. Apparatus according to one of Claims 11–20, characterized in that the mixing section (53) in which the metal melt is inductively moved extends between the two parts of a vessel (51) which is divided into two parts by a wall (T).

23. Apparatus according to one of Claims 11–20, characterized in that the mixing section (74) connects two vessels (71, 72) to one and in that, with a view to circulation of the metal, the lower parts of the two metallurgical vessels (71, 72) are connected to one another by a pipe (75).

24. Apparatus according to one of Claims 11–20, characterized in that a plurality of metallurgical vessels (91, 92, 93) are mutually interconnected by means of several mixing sections (94, 94a) metallurgical reactions of various types being carried out in the individual vessels (91, 92, 93) and mixing sections (94, 94a).

25. Apparatus according to one of Claims 11–20, characterized in that a plurality of mixing sections (32a, 32b, 32c) are arranged in series, and in that a specific metallurgical treatment is carried out in each mixing section (32a, 32b, 32c), siphon systems (S1, S2, S3) with take-off connectors (34) for removing reaction slags or waste gases being arranged between the individual mixing sections.

26. Apparatus according to one of Claims 11–25, characterized in that the mixing section is of straight design.

27. Apparatus according to one of Claims 11–25, characterized in that the mixing section is of curved design.

28. Apparatus according to one of Claims 11–25, characterized in that the vessel or the mixing section is of tiltable design.

29. Apparatus according to one of Claims 11–25, characterized in that the vessel or the mixing section is connected to interacting metallurgical vessels which are themselves of tiltable design.

**Revendications**

1. Procédé de traitement de bains de fusion par addition de substances chimiquement actives ou d'éléments d'alliage, le bain de fusion étant mis en mouvement dans un récipient approprié en substance cylindrique au moyen d'une force électromagnétique, caractérisé en ce que le récipient est rempli de bain de fusion à traiter au moins au-delà de la moitié et en ce que le bain de fusion s'élève jusqu'au sommet du récipient par un mouvement rotatif, puis retombe ou est ramené, en substance dans la direction de l'axe du récipient, à la surface du bain de fusion, où lesdits substances ou éléments ont été déposés.

2. Procédé selon la revendication 1, caractérisé en ce que le degré de remplissage ⌀ = H/D du récipient se situe entre 0,75 et 0,90, H et D représentant le niveau de remplissage du bain de fusion ou le diamètre du récipient.

3. Procédé selon l'une quelconque des revendications 1 et 2, caractérisé en ce que le bain de fusion est déplacé sur la longueur entière du récipient dans le même sens de rotation.

4. Procédé selon l'une quelconque des revendications 1 et 2, caractérisé en ce qu'on a prévu, sur la longueur du récipient, au moins deux zones où le bain de fusion est déplacé dans des sens opposés.

5. Procédé selon l'une quelconque des revendications 1 à 4, caractérisé en ce que le mélange provoqué par induction est soutenu par des forces mécaniques.

6. Procédé selon l'une quelconque des revendications 1 à 5, caractérisé en ce qu'un mouvement axial supplémentaire du bain de fusion est produit par la force électromagnétique provoquant le mouvement rotatif et en ce que, de cette façon, une voie de mélange est formée.

7. Procédé selon la revendication 6, caractérisé en ce que la voie de mélange est formée en s'élevant dans le sens du courant par inclinaison du récipient ou de l'organe de passage, et en ce qu'on provoque un contre-courant entre le bain de fusion ascendant et les matières d'addition descendantes en déposant les matières à l'extrémité de la voie de mélange.

8. Procédé selon l'une quelconque des revendications 6 et 7, caractérisé en ce qu'un courant électrique, de préférence un courant continu, passe par le bain de fusion dans la zone de la voie de mélange.

9. Procédé selon l'une quelconque des revendications 6 à 8, caractérisé en ce qu'une quantité partielle est prélevée d'un récipient métallurgique, traitée dans au moins une voie de mélange, et puis ramenée dans le même récipient.

10. Procédé selon l'une quelconque des revendications 6 à 8, caractérisé en ce qu'une quantité partielle est prélevée d'un récipient métallurgique, traitée dans la voie de mélange, et puis transportée dans un deuxième récipient.

11. Dispositif pour la mise en œuvre du procédé selon l'une quelconque des revendications 1 à 10, caractérisé en ce qu'à l'extérieur de la paroi du récipient cylindrique (1) horizontal ou faiblement incliné, on a disposé des inducteurs (14) qui exercent tant des forces rotatives qu'axiales sur le bain de fusion (2) et en ce que le récipient (1) est pourvu de moyens (19) pour ajouter des matières d'addition à la surface du bain de fusion.

12. Dispositif selon la revendication 11, caractérisé en ce que plusieurs inducteurs (14, 14a, 14b) sont disposés parallèlement à l'axe du récipient.

13. Dispositif selon la revendication 11, caractérisé en ce que plusieurs inducteurs (14, 14a, 14b) sont disposés selon une ligne se développant hélicoïdalement autour de l'axe du récipient.

14. Dispositif selon l'une quelconque des revendications 11 à 13, caractérisé en ce que le récipient (1) est un four tubulaire fermé.

15. Dispositif selon l'une quelconque des revendications 11 à 13, caractérisé en ce que le récipient (1) est un four à rigole ouvert.

16. Dispositif selon l'une quelconque des revendications 11 à 15, caractérisé en ce que le récipient (1) est compartimenté par des cloisons intermédiaires, des liaisons étant prévues entre les compartiments.

17. Dispositif selon l'une quelconque des revendications 11 à 16, caractérisé en ce que le récipient (1) a une tubulure (20) pour soutirer les matières évaporées ou gazéifiées.

18. Dispositif selon l'une quelconque des revendications 11 à 16, caractérisé en ce que le récipient (1) comprend des moyens pour chauffer le bain, de préférence des inducteurs à canaux.

19. Dispositif selon l'une quelconque des revendications 11 à 18, caractérisé en ce que les inducteurs sont conçus de telle sorte qu'ils agissent simultanément comme inducteurs de mélange et de chauffage.

20. Dispositif selon l'une quelconque des revendications 11 à 19, caractérisé en ce que l'alimentation en courant électrique des inducteurs comprend des moyens pour superposer des courants pulsés à l'apport de courant normal ou pour modifier temporairement la fréquence du courant.

21. Dispositif selon l'une quelconque des revendications 11 à 20, caractérisé en ce que l'organe de passage occupe, en liaison avec l'admission et l'émission du bain de fusion, une position inclinée dans laquelle la sortie se situe à un niveau supérieur.

22. Dispositif selon l'une quelconque des revendications 11 à 20, caractérisé en ce que la voie de mélange (53) où le bain de fusion se déplace par induction, s'étend entre les deux parties d'un récipient (51), séparées par une cloison (T).

23. Dispositif selon l'une quelconque des revendications 11 à 20, caractérisé en ce que la voie de mélange (74) relie l'un à l'autre deux récipients (71, 72) et en ce que les parties inférieures des deux récipients métallurgiques (71, 72) sont raccordées par un tuyau (75) en regard à la recirculation du bain de fusion.

24. Dispositif selon l'une quelconque des revendications 11 à 20, caractérisé en ce que plusieurs récipients métallurgiques (91, 92, 93) sont reliés entre eux par plusieurs voies de mélange (94, 94a), différentes réactions métallurgiques étant réalisées dans les divers récipients (91, 92, 93).

25. Dispositif selon l'une quelconque des revendications 11 à 20, caractérisé en ce que plusieurs voies de mélange (32a, 32b, 32c) sont montées en série et en ce qu'un traitement métallurgique spécifique est réalisé dans chaque voie de mélange (32a, 32b, 32c), des siphons (S1, S2, S3), pourvus de tubulures (34) pour l'évacuation des scories de réaction ou des gaz de fumée, étant disposés entre ces voies de mélange.

26. Dispositif selon l'une quelconque des revendications 11 à 25, caractérisé en ce que la voie de mélange est rectiligne.

27. Dispositif selon l'une quelconque des revendications 11 à 25, caractérisé en ce que la voie de mélange est courbe.

28. Dispositif selon l'une quelconque des revendications 11 à 25, caractérisé en ce que le récipient ou la voie de mélange est basculable.

29. Dispositif selon l'une quelconque des revendications 11 à 25, caractérisé en ce que le récipient ou la voie de mélange est relié à des récipients métallurgiques coopérants, eux-mêmes basculables.

Fig.1

Fig.1a

Fig.1b

**Fig.2**

EP 0 252 308 B1

**Fig. 3**

Fig.4

EP 0 252 308 B1

Fig. 5a

Fig. 5b

EP 0 252 308 B1

Fig. 5c

Fig. 6

Fig. 6a

**Fig.7**

**Fig.7a**

Fig. 8

Fig. 8b